Europäisches Patentamt

European Patent Office

Office européen des brevets

(19)

(11) Numéro de publication : **0 285 537 B1**

(12)    **FASCICULE DE BREVET EUROPEEN**

(45) Date de publication du fascicule du brevet :
22.05.91 Bulletin 91/21

(51) Int. Cl.⁵ : **A01D 78/12, A01D 80/02**

(21) Numéro de dépôt : **88440025.0**

(22) Date de dépôt : **23.03.88**

(54) **Machine de fenaison.**

(30) Priorité : **01.04.87 FR 8704672**

(43) Date de publication de la demande :
**05.10.88 Bulletin 88/40**

(45) Mention de la délivrance du brevet :
**22.05.91 Bulletin 91/21**

(84) Etats contractants désignés :
**AT DE ES FR IT NL**

(56) Documents cités :
**CH-A- 535 001**
**DE-A- 2 918 211**
**DE-B- 2 057 370**

(73) Titulaire : **KUHN S.A.**
**4, Impasse des Fabriques**
**F-67700 Saverne (FR)**

(72) Inventeur : **Aron, Jérôme**
**3, rue des Comtes de Rosen**
**Dossenheim-sur-Zinsel F-67330 Bouxwiller**
**(FR)**

(74) Mandataire : **Andres, Jean-Claude**
**KUHN S.A. 4, Impasse des Fabriques**
**F-67700 Saverne (FR)**

sensiblement verticale dans une position sensiblement horizontale et vice versa. Dans la position sensiblement verticale, les outils (11) ramassent et déplacent latéralement le fourrage se trouvant au sol. Dès qu'ils pivotent vers le haut dans la position sensiblement horizontale, ils libèrent le fourrage ramassé et le déposent sous la forme d'un andain.

Conformément à l'invention, la partie extérieure (17) de chaque bras porte-outils (10) sur laquelle sont fixés les outils de travail (11), est décalée par rapport à la partie intérieure (18) du même bras, de telle sorte que le centre de gravité (G) de chaque ensemble comprenant ladite partie extérieure (17) et les outils de travail (11), se situe sensiblement sur l'axe de pivotement longitudinal (16) du bras (10) correspondant. Les pièces en mouvement autour de cet axe (16) sont ainsi équilibrées. De ce fait, il n'y a pas de chocs à chaque pivotement sur les paliers de guidage (9) et les moyens de commande des bras (10).

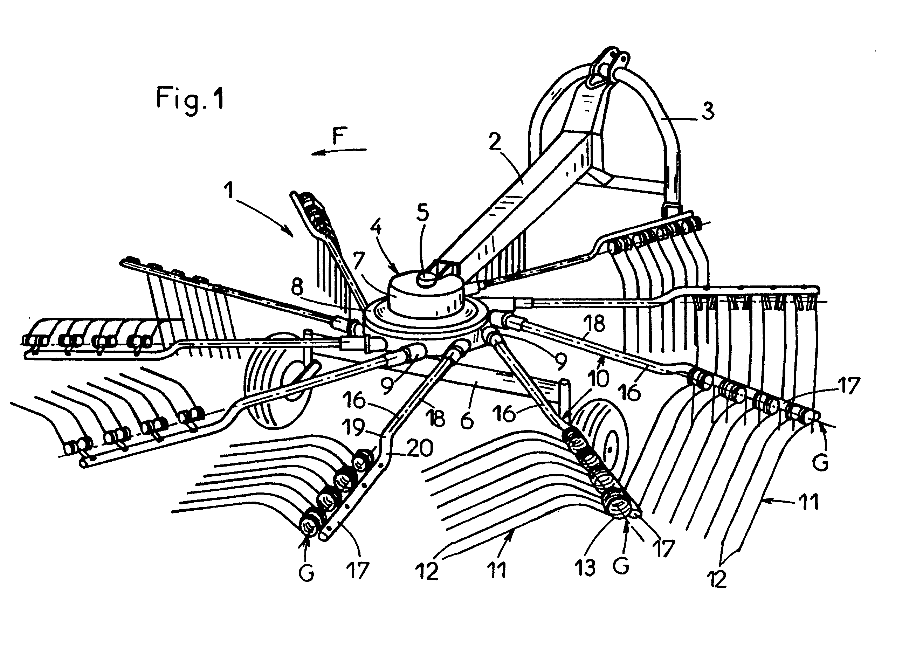

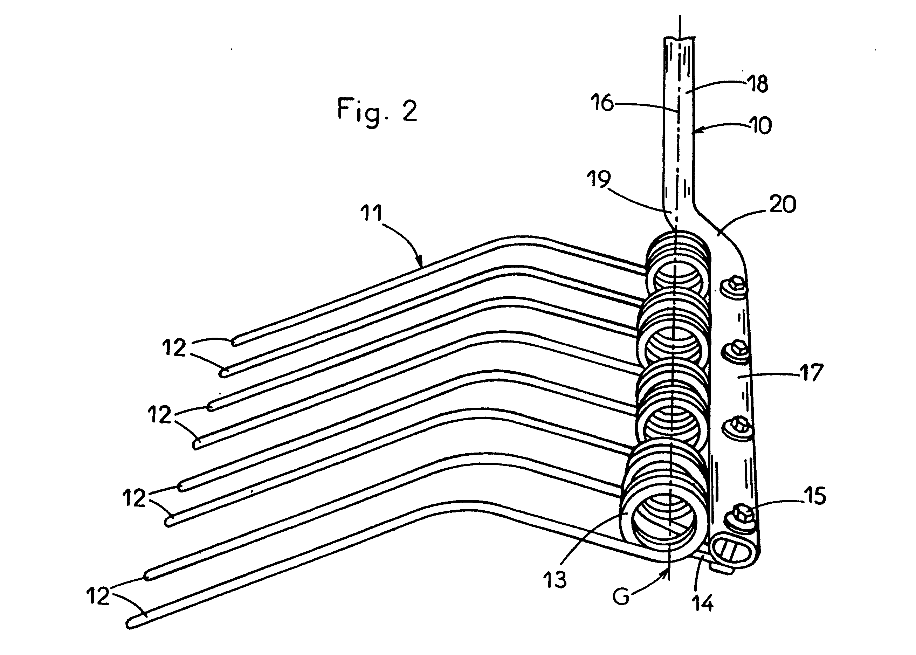

Il ressort notamment de la figure 2 que ladite partie extérieure (17) de chaque bras (10) est décalée par rapport à l'axe de pivotement (16) vers le côté opposé à celui sur lequel se situent la majeure partie des outils de travail (11). Cet agencement permet de rapprocher ces derniers de l'axe de pivotement (16) et d'équilibrer le poids des outils (11) en partie au moins au moyen des bras (10) eux-mêmes.

Ce décalage peut être réalisé comme représenté, en prévoyant sur chaque bras porte-outils (10), deux coudes (19 et 20) situés l'un à la suite de l'autre et qui sont dirigés dans des directions contraires. Ce décalage peut aussi être obtenu en réalisant chaque bras porte-outils (10) en deux parties distinctes qui sont décalées l'une par rapport à l'autre et reliées entre elles au moyen d'une traverse.

Les deux parties (17 et 18) de chaque bras porte-outils (10) sont sensiblement parallèles entre elles. Cette caractéristique permet notamment de bien contrôler la position des outils de travail (11) à la fois dans la zone de râtelage et lors de leur pivotement pour la libération du fourrage et la formation de l'andain.

Il est bien évident que l'on pourra encore apporter d'autres perfectionnements, modifications ou additions ou remplacer certains éléments par des éléments équivalents, sans pour autant sortir du cadre de l'invention.

**Revendications**

1. Machine de fenaison destinée notamment à l'andainage de fourrage, comportant au moins une roue râteleuse (1) entraînée en rotation durant le travail, laquelle roue râteleuse (1) est munie de bras porte-outils (10) commandés de telle manière qu'à chaque révolution, ils pivotent autour de leurs axes longitudinaux (16) respectifs, en vue de la dépose du fourrage râtelé, au moins la partie extérieure (17) de chaque bras (10), sur laquelle sont fixés les outils de travail (11), est décalée par rapport à la partie intérieure (18) du même bras (10) caractérisé par le fait que le centre de gravité (G) de chaque ensemble incluant ladite partie extérieure (17) et les outils de travail (11), se situe sensiblement sur l'axe de pivotement (16) du bras porte-outils (10) correspondant.

2. Machine de fenaison selon la revendication 1, caractérisée par le fait que la partie extérieure (17) de chaque bras porte-outils (10) est décalée par rapport à son axe de pivotement (16) vers le côté opposé à celui sur lequel se situent les outils de travail (11).

3. Machine de fenaison selon la revendication 1 ou 2, caractérisée par le fait que chaque bras porte-outils (10) comporte deux coudes (19 et 20) qui sont situés l'un à la suite de l'autre et sont dirigés dans des directions contraires.

4. Machine de fenaison selon la revendication 1 ou 2, caractérisée par le fait que chaque bras porte-outils (10) est réalisé en deux parties distinctes qui sont décalées l'une par rapport à l'autre et reliées entre elles au moyen d'une traverse.

5. Machine de fenaison selon l'une quelconque des revendications précédentes, caractérisée par le fait que la partie intérieure (18) et la partie extérieure (17) de chaque bras porte-outils (10) sont sensiblement parallèles entre elles.

**Ansprüche**

1. Heuwerbungsmaschine, insbesonders zum Schwaden von Futter, die zumindest ein im Betrieb in Rotation gesetztes Rechrad (1) besitzt, welches Rechrad (1) mit Werkzeugträgerarmen (10) versehen ist, die derart gesteuert sind, dass sie bei jeder Umdrehung zwecks Ablage des gerechten Futters um ihre jeweiligen Längsachsen (16) schwenken, wobei zumindest der äussere Teil (17) jedes Armes (10), an dem die Arbeitswerkzeuge (11) montiert sind, in bezug auf den inneren Teil (18) desselben Armes (10) versetzt ist, dadurch gekennzeichnet, dass sich der Schwerpunkt (G) jeder den äusseren Teil (17) und die Arbeitswerkzeuge (11) umfassenden Einheit im wesentlichen auf der Schwenkachse (16) des entsprechenden Werkzeugträgerarmes (10) befindet.

2. Heuwerbungsmaschine nach Anspruch 1, dadurch gekennzeichnet, dass der äussere Teil (17) jedes Werkzeugträgerarmes (10) in bezug auf seine Schwenkachse (16) auf die Seite versetzt ist, die von jener abgekehrt ist, an der sich die Arbeitswerkzeuge (11) befinden.

3. Heuwerbungsmaschine nach Anspruch 1 oder 2, dadurch gekennzeichnet, dass jeder Werkzeugträgerarm (10) zwei Biegungen (19 und 20) aufweist, die hintereinander angeordnet und entgegengesetzt gerichtet sind.

Fig.1

EP 0 285 537 B1

Fig. 2